# EUROPEAN PATENT SPECIFICATION

(11) **EP 2 385 580 B1**
(45) Date of publication and mention of the grant of the patent: **09.04.2014**
(21) Application number: 10735891.3
(22) Date of filing: 29.01.2010
(51) Int. Cl.: G06K 19/077, H01Q 7/00, G06K 19/07, H01Q 1/50, H01Q 9/42, H01Q 1/36, H01Q 1/22, H01Q 9/28

(54) **ANTENNA AND WIRELESS IC DEVICE**
ANTENNE UND DRAHTLOSE IC-VORRICHTUNG
ANTENNE ET DISPOSITIF DE CIRCUIT INTÉGRÉ SANS FIL

(30) Priority: 30.01.2009 JP 2009020934
(43) Date of publication of application: 09.11.2011
(73) Proprietor: Murata Manufacturing Co., Ltd., Kyoto 617-8555 (JP)
(72) Inventor: KATO Noboru, Nagaokakyo-shi Kyoto 617-8555 (JP); SASAKI Jun, Nagaokakyo-shi Kyoto 617-8555 (JP); MIURA Teppei, Nagaokakyo-shi Kyoto 617-8555 (JP); GOUCHI Naoki, Nagaokakyo-shi Kyoto 617-8555 (JP)
(74) Representative: Stöckeler, Ferdinand
(86) International application number: PCT/JP2010/051205
(87) International publication number: WO 2010/087429

(56) References cited:
- EP-A1- 1 031 940
- WO-A1-2008/081699
- JP-A- 2001 101 371
- JP-A- 2002 007 985
- JP-A- 2003 332 820
- JP-T- 2000 510 271
- US-A- 5 754 110
- US-A1- 2006 043 198
- US-B1- 6 378 774

## Description

### Technical Field

The present invention relates to an antenna and a wireless IC device, and more particularly, to an antenna for a wireless IC device used in an RFID (Radio Frequency Identification) system and a wireless IC device equipped with the antenna.

### Background Art

In general, RFID systems in which a reader/writer that generates an electromagnetic wave and a wireless IC (referred to as an IC tag, a wireless IC device, etc.) that is attached on an article, a container or the like and stores predetermined information communicate with each other in a non-contact manner to transfer information have been developed as a management system for articles. Communication with the reader/writer is achieved by coupling the wireless IC with an antenna (emission plate).

As a wireless IC of this type, JP 10-293 828 A describes a wireless IC in which a coil L11 of an ID module 100 and a coil L12 of an a coil module 110 are coupled and set to resonate at a predetermined frequency, as shown in

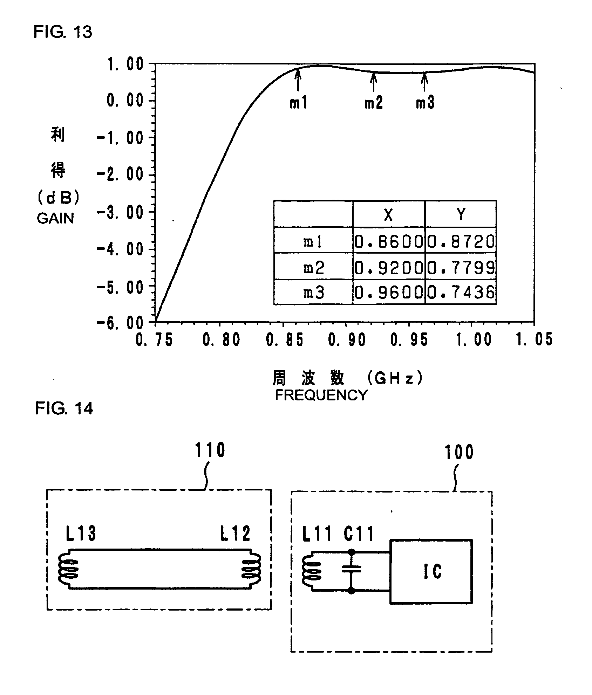

Fig. 14 of the present specification. The ID module 100 causes the primary coil L11 and a capacitor C11 to produce parallel resonance. The coil module 110 is configured to have a closed loop by electrically connecting the ends of two coils L12 and L13 with each other. Energy is transferred between the two coils L12 and L13 by current. That is, a magnetic field is emitted when the current, which is generated by the coil L12 coupled with the primary coil L11, passes through the coil L13.

However, increasing the inductance value of the coil for emission L13 and decreasing the inductance value of the coupling coil L12 in order to increase the magnetic field energy to be received from the reader/writer causes the voltage at the ends of the coil L12 to decrease. Therefore, there is a problem in that the amount of current flowing between the two coils L12 and L13 is decreased and thus sufficient energy is not transferred from the IC to the coil for emission L13, causing the communication distance to be decreased. In addition, when the coil for emission L13 comes close to the antenna of the reader/writer or comes close to another wireless IC, the inductance value varies due to the mutual inductance and the resonant frequency of the primary coil L11 also varies. As a result, reading by the reader/writer may be disabled.

JP 2002-007985 A describes a noncontact IC card comprising a card substrate, an antenna coil provided on the card substrate, and a resonance frequency adjusting part provided at a leading edge of the antenna coil.

EP 1 031 940 A1 describes transponder circuits which are arranged on an electrically insulating carrier. The antenna conductor of each transponder circuit is conductively connected with the conductor of the next transponder circuit by a bridge.

It is an object of the present invention to provide an antenna for a wireless IC device having improved energy transfer efficiency with a wireless IC, and a wireless IC device equipped with the antenna.

This object is achieved by an antenna of claim 1.

In the antenna and the wireless IC device, the spiral coupling patterns coupled to the antenna pattern are disposed so as to face each other to form a single LC resonator. That is, a capacitor is formed between the spiral coupling patterns disposed so as to face each other, and LC resonance is obtained by using this capacitor and inductances formed by the spiral coupling patterns. This LC resonance increases the impedance to infinity, whereby energy is concentrated in the coupling patterns. As a result, energy transfer efficiency between the antenna and the wireless IC mounted thereon is improved.

In the antenna and the wireless IC device, the antenna pattern may be a single coiled pattern, two coiled patterns disposed so as to face each other, or two circular patterns having at least a pair of ends and disposed so as to face each other, and may have a dipole-type emitter coupled to the circular patterns. In particular, more magnetic fields can be generated when two layers of antenna patterns are disposed so as to face each other. In addition, when the antenna patterns, which are disposed in a pair, are coupled to each other and the coupling patterns, which are disposed in a pair, are coupled to each other, stray capacitance is prevented from occurring between the patterns even when multiple wireless IC devices come close thereto or a dielectric, such as a human hand, comes close thereto, thereby preventing resonant frequency variation. Advantageous Effects of Invention

According to the present invention, the transfer efficiency between the antenna and the wireless IC is improved and energy can be transferred efficiently.

### Brief Description of the Drawings

Fig. 1 is a sectional view illustrating a wireless IC device of the first embodiment.
Fig. 2 is a perspective view illustrating main components of the wireless IC device of the first embodiment.
Fig. 3 is a perspective view illustrating enlarged coupling patterns of the wireless IC device of the first embodiment.
Fig. 4 is a plan view illustrating a disassembled layered structure of a feeder circuit substrate to be mounted on the wireless IC device of the first embodiment.
Fig. 5 is a perspective view illustrating main components of a wireless IC device of the second embodiment.
Fig. 6 is a plan view illustrating enlarged coupling patterns of the wireless IC device of the second embodiment.
Fig. 7 is an equivalent circuit diagram of an antenna forming the first embodiment.
Fig. 8 is an equivalent circuit diagram of an antenna forming the second embodiment.
Fig. 9 is a plan view of a wireless IC device of the third embodiment.
Fig. 10 is a plan view of an antenna pattern arranged on the front surface side of the wireless IC device of the third embodiment.
Fig. 11 is a plan view of an antenna pattern arranged on the back surface side of the wireless IC device of the third embodiment.
Fig. 12 is a plan view illustrating a disassembled layered structure of a feeder circuit substrate mounted on the wireless IC device of the third embodiment.
Fig. 13 is a graph illustrating the gain of the wireless IC device of the third embodiment.
Fig. 14 is an equivalent circuit diagram illustrating an example of a wireless IC device that has hitherto been used.

### Description of Embodiments

The embodiments of an antenna and a wireless IC device of the present invention will be described below with reference to the accompanying drawings. Note that common reference signs are used to denote the same members and sections in the drawings, and duplicate explanation is omitted.

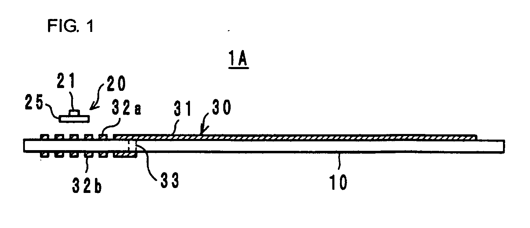

### First Embodiment (refer to Figs. 1 to 4 and 7)

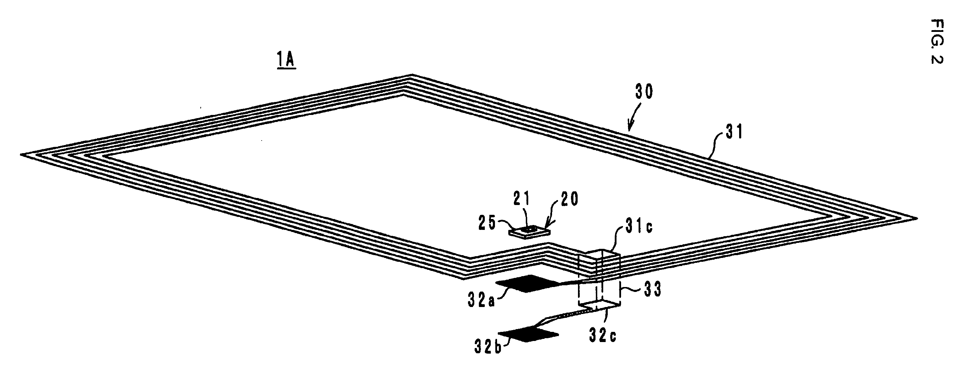

A wireless IC device 1A, which is the first embodiment, is composed of a substrate 10, a coupling module 20 and an antenna 30, as shown in Figs. 1 and 2. The coupling module 20 is formed of a wireless IC chip 21 and a feeder circuit substrate 25 having a feeder circuit to be coupled to the wireless IC chip 21. The antenna 30 is formed of a coiled pattern 31 and spiral coupling patterns 32a and 32b that are formed at the ends of the coiled pattern 31 and disposed so as to face each other.

The substrate 10 is formed of a dielectric such as a PET film. The coiled pattern 31 is formed into a coil shape on the front surface of the substrate 10, as shown in Fig. 2. The spiral coupling pattern 32a is formed at one end thereof. The spiral coupling pattern 32b is disposed on the back surface of the substrate 10 so as to face the coupling pattern 32a. An end 32c of the coupling pattern 32b is electrically connected to the other end 31c of the coiled pattern 31 through a via hole conductor 33.

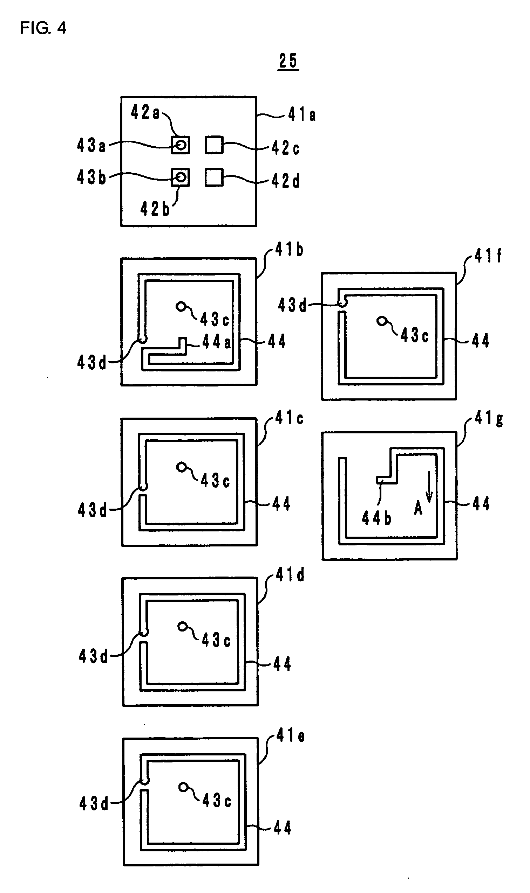

The wireless IC chip 21 includes a clock circuit, a logic circuit, a memory circuit, and so on, as known in the art, and necessary information is stored therein. The wireless IC chip 21 is provided with an input terminal electrode, an output terminal electrode and terminal electrodes for mounting, which are not shown. The feeder circuit substrate 25 is, as described below with reference to Fig. 4, a layered substrate in which the feeder circuit including an inductor is embedded, and mounted (bonded) on the coupling pattern 32a. Note that, although the coupling module 20 is formed of the wireless IC chip 21 and the feeder circuit substrate 25 that are separately formed, a wireless IC and a feeder circuit may be integrally formed on a single substrate.

Here, an example of the feeder circuit embedded in the feeder circuit substrate 25 will be described with reference to Fig. 4. The feeder circuit substrate 25 is formed of layered multiple sheets 41a to 41g having electrodes formed thereon. Each of the sheets 41a to 41g is made of ceramic or resin.

Electrodes 42a to 42d are formed on and via hole conductors 43a and 43b are formed through the sheet 41a. An electrode 44 is formed on and via hole conductors 43c and 43d are formed through the sheets 41b to 41f. An electrode 44 is formed on the sheet 41g.

When the sheets 41a to 41g are layered, the electrodes 44 of the sheets are electrically connected together through the via hole conductor 43d, thereby forming an inductor. One end of the inductor (an end 44a of the electrode 44 on the sheet 41b) is connected to the electrode 42b on the sheet 41a through the via hole conductor 43b. The other end of the inductor (an end 44b of the electrode 44 on the sheet 41g) is connected to the electrode 42a on the sheet 41a through the via hole conductors 43c and 43a. The inductor resonates at a predetermined resonant frequency with the inductance thereof and the capacitance between lines of the electrode 44.

The electrodes 42a and 42b on the sheet 41a are connected to the input terminal electrode and the output terminal electrode, respectively, of the wireless IC chip 21. The electrodes 42c and 42d on the sheet 41a are connected to the terminal electrodes for mounting of the wireless IC chip 21. In addition, the inductor is magnetically coupled to the coupling patterns 32a and 32b.

In the wireless IC device 1A composed of the above structures, a high-frequency signal (for example, a UHF frequency band or an HF frequency band) emitted from the reader/writer is received by the coiled pattern 31, and the feeder circuit magnetically coupled to the coupling patterns 32a and 32b is resonated to feed only a reception signal of a predetermined frequency to the wireless IC chip 21. The wireless IC chip 21 extracts a predetermined energy from the reception signal and reads the stored information by using the energy as a driving source. After being matched to a predetermined frequency in the feeder circuit, the energy is emitted from the coiled pattern 31 as a transmission signal through the coupling patterns 32a and 32b and transmitted to the reader/writer.

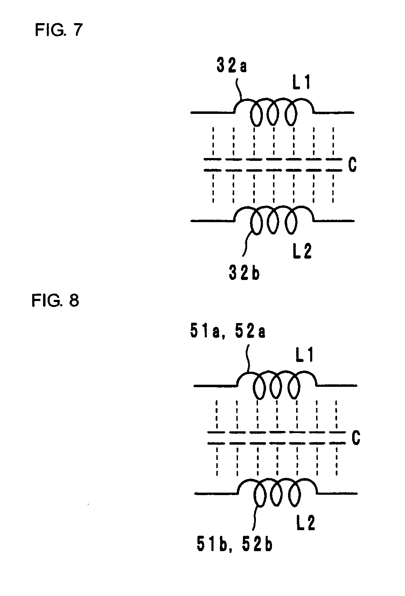

The coiled pattern 31 is of an open type. The coupling patterns 32a and 32b located at the ends of the coiled pattern 31 are close to each other and form an LC resonator (see Fig. 7). That is, a capacitor C is formed between the spiral coupling patterns 32a and 32b disposed so as to face each other, and LC resonance is obtained by using the capacitor C and the inductances L1 and L2 formed by the spiral coupling patterns 32a and 32b. This LC resonance increases the impedance to infinity, whereby energy is concentrated in the coupling patterns 32a and 32b. As a result, energy transfer efficiency between the antenna 30 and the wireless IC chip 21 mounted thereon is improved. In addition, since the two facing coupling patterns 32a and 32b are wound from the center in the opposite directions in plan view, the directions of current flow become the same. Therefore, the directions of magnetic field are matched, and the degree of coupling is improved.

Further, the resonant frequency of the feeder circuit substantially corresponds to the resonant frequency of the reception/transmission signal. That is, the resonant frequency of the resonance circuit determines the resonant frequency of the wireless IC device 1A. Therefore, communication can be performed at the resonant frequency of the resonance circuit independent of the resonant frequency of the coiled pattern 31, and thus a combination of the antenna 30 of one type with the feeder circuit substrate 25 of various resonant frequencies is allowed. In addition, since effects from other objects will not change the resonant frequency of the resonance circuit, a stable communication with the reader/writer is obtained.

The resonant frequency of the coiled pattern 31 preferably is set to be higher than the resonant frequency of the resonance circuit included in the feeder circuit substrate 25. For example, when the resonant frequency of the feeder circuit is 13.56 MHz, the resonant frequency of the coiled pattern 31 is set to 14 MHz. This causes the feeder circuit and the coiled pattern 31 to be magnetically coupled all the time. For the antenna 30 itself, the communication distance becomes large when the resonant frequency thereof becomes close to the resonant frequency of the resonance circuit. However, when a communication failure in the case where another wireless IC device or a dielectric such as a human hand comes close to the antenna 30 is considered, it is preferable that the resonant frequency of the coiled pattern 31 be set to the higher frequency side.

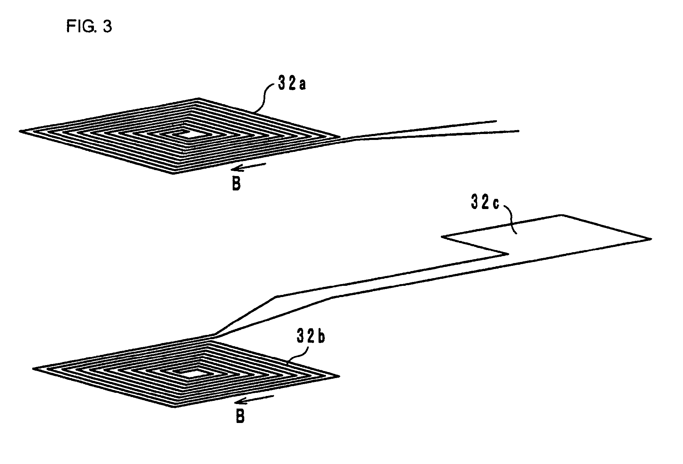

Furthermore, since the coupling patterns 32a and 32b are disposed directly under the magnetic field emitted from the feeder circuit substrate 25, and the inductor in the feeder circuit substrate 25 is formed into a spiral shape so that the current flows in the same direction as the coupling patterns 32a and 32b (the direction of the current flowing in the inductor is shown as direction A in Fig. 4, and the direction of the currents flowing in the coupling patterns 32a and 32b is shown as direction B in Fig. 3), energy can be transferred more efficiently.

Although the wireless IC chip 21 and the feeder circuit substrate 25 are electrically connected to each other, it is sufficient that the feeder circuit substrate 25 and the antenna 30 are bonded by using an insulating adhesive agent. Since bonding can be made in any direction and the area of the coupling patterns 32a and 32b is larger than the area of the feeder circuit substrate 25, positioning is extremely easy when the coupling module 20 is mounted on the coupling pattern 32a.

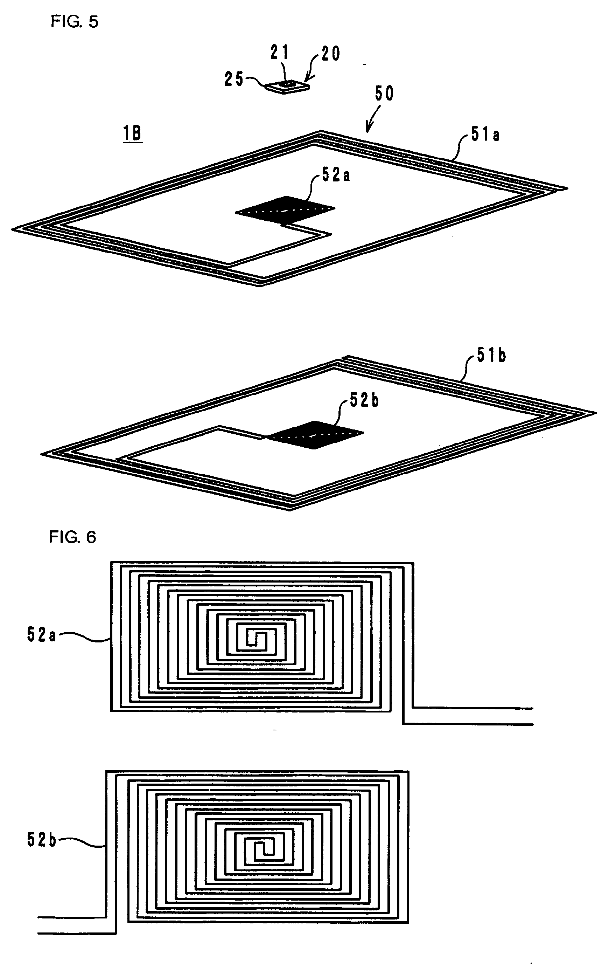

The aforementioned feeder circuit substrate 25 is preferably made of a material containing a magnetic substance. The Q value becomes high even when the embedded inductor is small, and thus the feeder circuit substrate 25 can be formed small. When the feeder circuit substrate 25 is formed of multiple layers, it is preferred that the magnetic permeability of the layer at the side of the surface that is mounted on the coupling pattern 32a be small (for example, using a non-magnetic layer). With a small magnetic permeability, a magnetic field may be generated easily at an adjacent exterior portion, whereby coupling force is increased only with the coupling patterns 32a and 32b, and thus interference from other objects is prevented.
Second Embodiment (refer to Figs. 5, 6 and 8)

A wireless IC device 1B, which is the second embodiment, is composed of a substrate (same as the substrate 10 of the first embodiment), which is not shown, the coupling module 20 and an antenna 50 shown in Fig. 5. The antenna 50 is formed of two coiled patterns 51a and 51b disposed on the front surface and the back surface, respectively, of the substrate so as to face each other, and spiral coupling patterns 52a and 52b formed at one end of the respective coiled patterns 51a and 51b and disposed so as to face each other. The coupling module 20 is the same as in the first embodiment and mounted (bonded) on the coupling pattern 52a. The communication configuration between the wireless IC device 1B and the reader/writer is the same as that in the first embodiment.

Also in the wireless IC device 1B, which is the present second embodiment, the coiled patterns 51a and 51b are of an open type. A capacitor C is formed between the coiled patterns 51a and 51b and between the spiral coupling patterns 52a and 52b, which are disposed so as to face each other, and LC resonance is obtained by the capacitor C and the inductances L1 and L2 formed, as a whole, of the two coiled patterns 51a and 51b and the spiral coupling patterns 52a and 52b (see Fig. 8). This LC resonance increases the impedance to infinity, whereby energy is concentrated in the coiled patterns 51a and 51b and the coupling patterns 52a and 52b. As a result, energy transfer efficiency between the antenna 50 and the wireless IC chip 21 mounted thereon is improved. In addition, since two layers of the coiled patterns 51a and 51b are disposed, more magnetic fields can be generated. Furthermore, since the coiled patterns 51a and 51b, which are disposed in a pair, are coupled to each other and the coupling patterns 52a and 52b, which are disposed in a pair, are coupled to each other, stray capacitance is prevented from occurring between the patterns even when multiple wireless IC devices come close thereto or a dielectric, such as a human hand, comes close thereto, thereby preventing resonant frequency variation. Other effects are the same as those of the first embodiment.

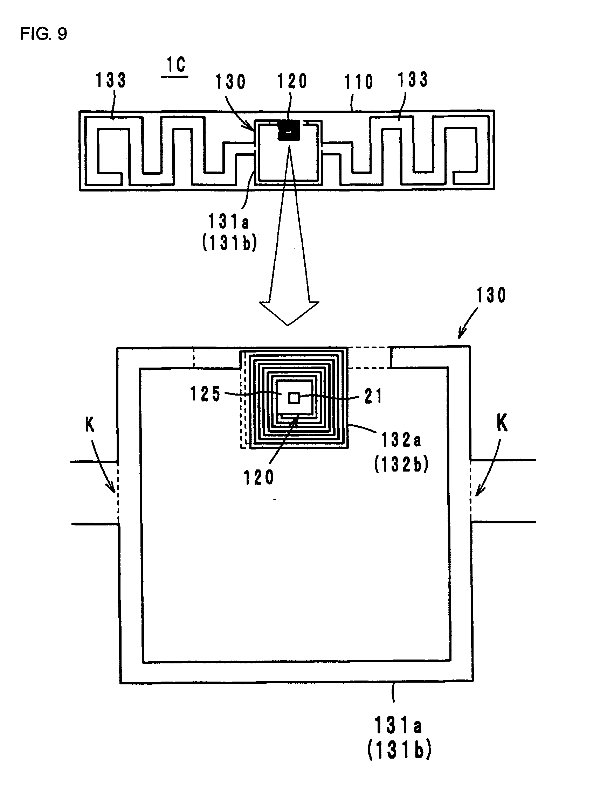

Meanwhile, in the second embodiment, the whole antenna 50 resonates at a predetermined frequency. Therefore, when the coupling module 20 is mounted on the coupling patterns 52a and 52b, which are a part of the antenna 50, the antenna 50 and the coupling module 20 are coupled only by magnetic field at a predetermined frequency. The antenna 50 and the reader/writer are coupled by electromagnetic field.
Third Embodiment (refer to Figs. 9 to 13)

A wireless IC device 1C, which is the third embodiment, is composed of a substrate 110, a coupling module 120 and an antenna 130, as shown in Fig. 9. The coupling module 120 is formed of a wireless IC chip 21 and a feeder circuit substrate 125 having a feeder circuit to be coupled to the wireless IC chip 21.

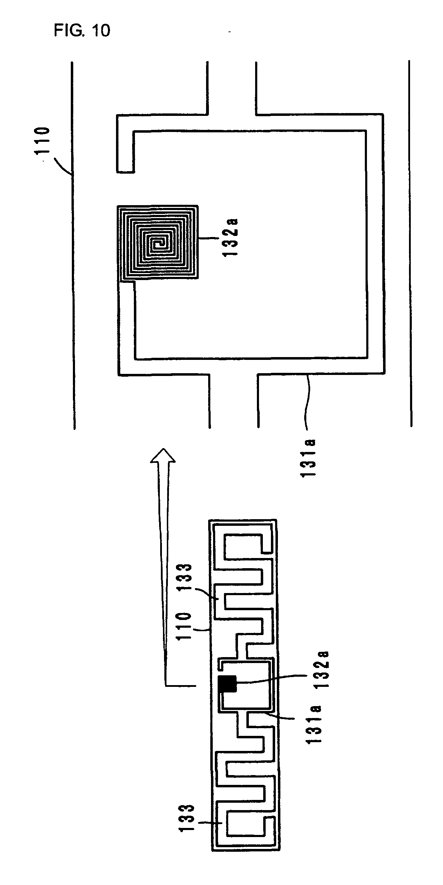

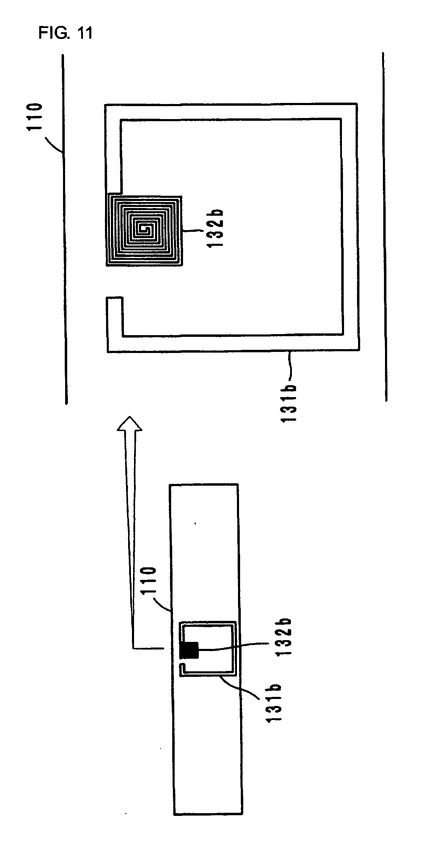

The antenna 130 (the front surface side is shown in Fig. 10 and the back surface side is shown in Fig. 11) is formed of two circular patterns 131a and 131b each having a pair of ends and disposed on the front surface and the back surface, respectively, of the substrate 110 so as to face each other.

Further, the antenna 130 is formed of spiral coupling patterns 132a and 132b formed at one end of the respective circular patterns 131a and 131b and disposed so as to face each other, and two emitters 133 extended to the sides from a part of the circular pattern 131a. The emitters 133 are coupled to the circular pattern 131a to provide functionality as a meander dipole-type antenna.

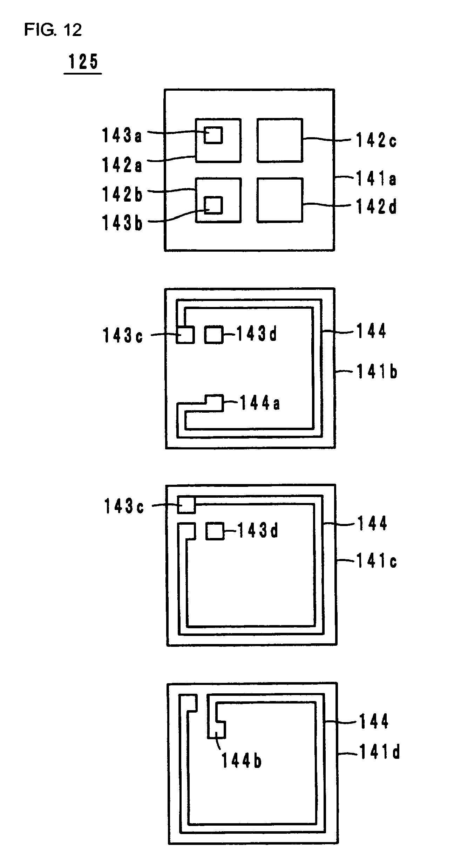

An example of the feeder circuit embedded in the feeder circuit substrate 125 will be described with reference to Fig. 12. The feeder circuit substrate 125 is formed of layered multiple sheets 141a to 141d having electrodes formed thereon. Each of the sheets 141a to 141d is made of ceramic or resin.

Electrodes 142a to 142d are formed on and via hole conductors 143a and 143b are formed through the sheet 141a. An electrode 144 is formed on and via hole conductors 143c and 143d are formed through the sheets 141b and 141c. An electrode 144 is formed on the sheet 141d.

When the sheets 141a to 141d are layered, the electrodes 144 of the sheets are electrically connected together through the via hole conductor 143c, thereby forming an inductor. One end of the inductor (an end 144a of the electrode 144 on the sheet 141b) is connected to the electrode 142b on the sheet 141a through the via hole conductor 143b. The other end of the inductor (an end 144b of the electrode 144 on the sheet 141d) is connected to the electrode 142a on the sheet 141a through the via hole conductors 143d and 143a. The inductor resonates at a predetermined resonant frequency with the inductance thereof and the capacitance between lines of the electrode 144.

The electrodes 142a and 142b on the sheet 141a are connected to the input terminal electrode and the output terminal electrode, respectively, of the wireless IC chip 21. The electrodes 142c and 142d on the sheet 141a are connected to the terminal electrodes for mounting of the wireless IC chip 21. In addition, the inductor is magnetically coupled to the coupling patterns 132a and 132b.

Also in the wireless IC device 1C, which is the present third embodiment, the circular patterns 131a and 131b are of an open type. A capacitor C is formed between the circular patterns 131a and 131b and between the spiral coupling patterns 132a and 132b, which are disposed so as to face each other, and LC resonance is obtained by the capacitor C and the inductances L1 and L2 formed, as a whole, of the two circular patterns 131a and 131b and the spiral coupling patterns 132a and 132b. That is, the same equivalent circuit as in Fig. 8 is formed. This LC resonance increases the impedance to infinity, whereby energy is concentrated in the circular patterns 131a and 131b and the coupling patterns 132a and 132b. As a result, energy transfer efficiency between the antenna 130 and the wireless IC chip 21 mounted thereon is improved. Consequently, a high frequency signal is efficiently emitted from the emitters 133, and a high frequency signal received by the emitters 133 is efficiently transferred to the feeder circuit. In the wireless IC device 1C of the present third embodiment, the circular patterns 131a and 131b are disposed so as to couple to the feeder circuit and the emitters 133, whereby the loss of a signal transferred to the emitters 133 can be reduced and a high gain can be obtained. The gain of the present wireless IC device 1C against frequency of a high frequency signal is illustrated as in Fig. 13. A high gain is achieved in a UHF frequency band.

Regarding the gain, a wider bandwidth can be obtained by changing the position of coupling points K (see Fig. 9) of the circular pattern 131a and the emitters 133. For example, a wider bandwidth can be obtained by moving the position of the coupling points K close to the coupling pattern 132a to increase the inductance value between the coupling points K. This is because when the inductance value between the coupling points K is increased, the bandwidth between two resonance points formed by the emitters 133 is increased. Note that the circular pattern 131a may be formed into a meander pattern or a spiral pattern in order to increase the inductance value between the coupling points K.

In addition, since two layers of the circular patterns 131a and 131b are disposed, more magnetic fields can be generated. Furthermore, since the circular patterns 131a and 131b, which are disposed in a pair, are coupled to each other and the coupling patterns 132a and 132b, which are disposed in a pair, are coupled to each other, stray capacitance is prevented from occurring between the patterns even when multiple wireless IC devices come close thereto or a dielectric, such as a human hand, comes close thereto, thereby preventing resonant frequency variation. Other effects are the same as those of the aforementioned first embodiment.

Meanwhile, in the third embodiment, the whole antenna 130 resonates at a predetermined frequency. Therefore, when the coupling module 120 is mounted on the coupling patterns 132a and 132b, which are a part of the antenna 130, the antenna 130 and the coupling module 120 are coupled only by magnetic field at a predetermined frequency. The antenna 130 and the reader/writer are coupled by electromagnetic field.

### Other Embodiments

The antenna and the wireless IC device according to the present invention are not limited to the foregoing embodiments. Various modifications are conceivable within the scope of the invention.

### Industrial Applicability

As described above, the present invention is useful in antennas and in wireless IC devices used in RFID systems. In particular, the present invention is superior in terms of the energy transfer efficiency with a wireless IC.
Reference Signs List

1A, 1B, 1C Wireless IC device
10, 110 Substrate
20, 120 Coupling module
21 Wireless IC chip
25, 125 Feeder circuit substrate
30, 50, 130 Antenna
31, 51a, 51b Coiled pattern
32a, 32b, 52a, 52b, 132a, 132b Coupling pattern
131a, 131b Circular pattern
133 Emitter

## Claims

1. An antenna, comprising:
a substrate (10; 110);
an antenna pattern (31; 51a, 51b; 131a, 131b); and
spiral coupling patterns (32a, 32b; 52a, 52b; 132a, 132b) coupled to the antenna pattern (31; 51a, 51b; 131a, 131b),
wherein the spiral coupling patterns (32a, 32b; 52a, 52b; 132a, 132b) comprise a first spiral coupling pattern (32a; 52a; 132a) formed on a front surface of the substrate (10; 110), and a second spiral coupling pattern (32b; 52b; 132b),
**characterized in that**
the second spiral coupling pattern (32b; 52b; 132b) is formed on a back surface of the substrate (10; 110), so as to face the first spiral coupling pattern (32a; 52a; 132a), and
the respective ends of the first and second spiral coupling patterns (32a, 32b; 52a, 52b; 132a, 132b) are connected to the antenna pattern (31; 51a, 51b; 131a, 131b).

2. The antenna according to claim 1,
wherein the antenna pattern (31) comprises a coiled pattern, and
wherein the spiral coupling patterns (32a, 32b) are formed at the ends of the coiled pattern (31).

3. The antenna according to claim 1,
wherein the antenna pattern (51a, 51b) comprises two coiled patterns disposed so as to face each other, and
wherein the spiral coupling patterns (52a, 52b) are formed at one end of the two respective coiled patterns (51a, 51b).

4. The antenna according to claim 1,
wherein the antenna pattern (131a, 131b) comprises two circular patterns having at least a pair of ends and disposed so as to face each other and has a dipole-type emitter coupled to the circular patterns, and
wherein the spiral coupling patterns (132a, 132b) are formed at one end of the two respective circular patterns (131a, 131b).

5. A wireless IC device, comprising:
an antenna according to one of claims 1 to 4; and
a coupling module (20; 120) formed of a wireless IC (21) and a feeder circuit substrate (25; 125) having a feeder circuit to be coupled to the wireless IC (21),
wherein the feeder circuit includes an inductor, and
wherein the coupling module (20; 120) is mounted on the spiral coupling patterns (32a, 32b; 52a, 52b; 132a, 132b).

6. The wireless IC device according to claim 5,
wherein the coupling module (20; 120) and the spiral coupling patterns (32a, 32b; 52a, 52b; 132a, 132b) are magnetically coupled.

7. The wireless IC device according to claim 4 or 5,
wherein the inductor is formed into a spiral shape so that current flows in the same direction as the spiral coupling patterns (32a, 32b; 52a, 52b; 132a, 132b).

8. The wireless IC device according to claim 6 or 7,
wherein the resonant frequency of the feeder circuit substantially corresponds to the resonant frequency of a reception/transmission signal.

9. The wireless IC device according to any of claims 5 to 8,
wherein the resonant frequency of the antenna pattern (31; 51a, 51b; 131a, 131b) is higher than the resonant frequency of the feeder circuit.

10. The wireless IC device according to any of claims 5 to 9,
wherein the area of the spiral coupling patterns (32a, 32b; 52a, 52b; 132a, 132b) is larger than the area of the feeder circuit substrate (25; 125).

11. The wireless IC device according to any of claims 5 to 10,
wherein the feeder circuit substrate (25; 125) is made of a material containing a magnetic substance.

12. The wireless IC device according to claim 11,
wherein the feeder circuit substrate (25; 125) is formed of multiple layers and the magnetic permeability of the layer at the side of the surface that is mounted on the spiral coupling pattern (32a, 32b; 52a, 52b; 132a, 132b) is small.

## Patentansprüche

1. Eine Antenne, die folgende Merkmale aufweist:
ein Substrat (10; 110);
eine Antennenstruktur (31; 51 a, 51 b; 131 a, 131b); und
Spiralkopplungsstrukturen (32a, 32b; 52a, 52b; 132a, 132b), die mit der Antennenstruktur (31; 51 a, 51 b; 131 a, 131 b) gekoppelt sind,
wobei die Spiralkopplungsstrukturen (32a, 32b; 52a, 52b; 132a, 132b) eine erste Spiralkopplungsstruktur (32a; 52a; 132a), die auf einer vorderen Oberfläche des Substrats (10; 110) gebildet ist, und eine zweite Spiralkopplungsstruktur (32b; 52b; 132b) aufweisen,
**dadurch gekennzeichnet, dass**:
die zweite Spiralkopplungsstruktur (32b; 52b; 132b) auf einer hinteren Oberfläche des Substrats (10; 110) gebildet ist, sodass sie der ersten Spiralkopplungsstruktur (32a; 52a; 132a) zugewandt ist, und
die jeweiligen Enden der ersten und der zweiten Spiralkopplungsstruktur (32a, 32b; 52a, 52b; 132a, 132b) mit der Antennenstruktur (31; 51 a, 51 b; 131 a, 131 b) verbunden sind.

2. Die Antenne gemäß Anspruch 1,
bei der die Antennenstruktur (31) eine gewickelte Struktur aufweist, und
bei der die Spiralkopplungsstrukturen (32a, 32b) an den Enden der gewickelten Struktur (31) gebildet sind.

3. Die Antenne gemäß Anspruch 1,
bei der die Antennenstruktur (51a, 51b) zwei gewickelte Strukturen aufweist, die so angeordnet sind, dass sie einander zugewandt sind, und
bei der die Spiralkopplungsstrukturen (52a, 52b) an einem Ende der beiden jeweiligen gewickelten Strukturen (51a, 51 b) gebildet sind.

4. Die Antenne gemäß Anspruch 1,
bei der die Antennenstruktur (131a, 131b) zwei kreisförmige Strukturen aufweist, die zumindest ein Paar von Enden aufweisen und so angeordnet sind, dass sie einander zugewandt sind, und einen Dipol-Typ-Emitter aufweist, der mit den kreisförmigen Strukturen gekoppelt ist, und
bei der die Spiralkopplungsstrukturen (132a, 132b) an einem Ende der beiden jeweiligen kreisförmigen Strukturen (131 a, 131 b) gebildet sind.

5. Ein Drahtlos-IC-Bauelement, das folgende Merkmale aufweist:
eine Antenne gemäß einem der Ansprüche 1 bis 4; und
ein Kopplungsmodul (20; 120), das aus einer Drahtlos-IC (21) und einem Zuführerschaltungssubstrat (25; 125) mit einer Zuführerschaltung, die mit der Drahtlos-IC (21) gekoppelt werden soll, gebildet ist,
wobei die Zuführerschaltung einen Induktor umfasst, und
wobei das Kopplungsmodul (20, 120) an den Spiralkopplungsstrukturen (32a, 32b; 52a, 52b; 132a, 132b) befestigt ist.

6. Das Drahtlos-IC-Bauelement gemäß Anspruch 5,
bei dem das Kopplungsmodul (20; 120) und die Spiralkopplungsstrukturen (32a, 32b; 52a, 52b; 132a, 132b) magnetisch gekoppelt sind.

7. Das Drahtlos-IC-Bauelement gemäß Anspruch 4 oder 5,
bei dem der Induktor in eine Spiralform gebildet ist, sodass Strom in der gleichen Richtung fließt wie den Spiralkopplungsstrukturen (32a, 32b; 52a, 52b; 132a, 132b).

8. Das Drahtlos-IC-Bauelement gemäß Anspruch 6 oder 7,
bei dem die Resonanzfrequenz der Zuführerschaltung im Wesentlichen der Resonanzfrequenz eines Empfangs-/Sendesignals entspricht.

9. Das Drahtlos-IC-Bauelement gemäß einem der Ansprüche 5 bis 8,
bei dem die Resonanzfrequenz der Antennenstruktur (31; 51a, 51b; 131a, 131b) höher ist als die Resonanzfrequenz der Zuführerschaltung.

10. Das Drahtlos-IC-Bauelement gemäß einem der Ansprüche 5 bis 9,
bei dem die Fläche der Spiralkopplungsstrukturen (32a, 32b; 52a, 52b; 132a, 132b) größer ist als die Fläche des Zuführerschaltungssubstrats (25; 125).

11. Das Drahtlos-IC-Bauelement gemäß einem der Ansprüche 5 bis 10,
bei dem das Zuführerschaltungssubstrat (25; 125) aus einem Material hergestellt ist, das eine magnetische Substanz beinhaltet.

12. Das Drahtlos-IC-Bauelement gemäß Anspruch 11,
bei dem das Zuführerschaltungssubstrat (25; 125) aus mehreren Schichten gebildet ist und die magnetische Permeabilität der Schicht an der Seite der Oberfläche, die an der Spiralkopplungsstruktur (32a, 32b; 52a, 52b; 132a, 132b) befestigt ist, klein ist.

## Revendications

1. Antenne, comportant :
un substrat (10 ; 110) ;
un motif d'antenne (31 ; 51a, 51b ; 131a ; 131b);
des motifs de couplage en spirale (32a, 32b ; 52a, 52b ; 132a, 132b) couplés au motif d'antenne (31 ; 51a, 51b ; 131a, 131b),
dans lequel les motifs de couplage en spirale (32a, 32b ; 52a, 52b ; 132a, 132b) comporte un premier motif de couplage en spirale (32a ; 52a ; 132a) formé sur une surface antérieure du substrat (10 ; 110), et un second motif de couplage en spirale (32b ; 52b ; 132b),
**caractérisé en ce que**
le second motif de couplage en spirale (32b ; 52b; 132b) est formé sur une surface postérieure du substrat (10 ; 110), de manière à faire face au premier motif de couplage en spirale (32a ; 52a ; 132a), et
les extrémités respectives des premiers et seconds motifs de couplage en spirale (32a, 32b; 52a, 52b ; 132a, 132b) sont reliés au motif d'antenne (31 ; 51a, 51b ; 131a, 131b).

2. Antenne selon la revendication 1,
dans laquelle le motif d'antenne (31) comporte un motif enroulé, et
dans laquelle les motifs de couplage en spirale (32a, 32b) sont formés aux extrémités du motif enroulé (31).

3. Antenne selon la revendication 1,
dans laquelle le motif d'antenne (51a, 51b) comporte deux motifs enroulés disposés de manière à se trouver en vis-à-vis, et
dans laquelle les motifs de couplage en spirale (52a, 52b) sont formés à une extrémité des deux motifs enroulés respectifs (51a, 51b).

4. Antenne selon la revendication 1,
dans laquelle le motif d'antenne (131a, 131b) comporte deux motifs circulaires possédant au moins une paire d'extrémités et disposés de manière à se trouver en vis-à-vis et possède un émetteur de type dipôle couplé aux motifs circulaires, et
dans laquelle les motifs de couplage en spirale (132a, 132b) sont formés à une extrémité des deux motifs circulaires respectifs (131a, 131b).

5. Dispositif à circuit intégré sans fil, comportant:
une antenne selon l'une des revendications 1 à 4;
un module de couplage (20 ; 120) constitué d'un circuit intégré sans fil (21) et d'un substrat de circuit d'alimentation (25 ; 125) possédant un circuit d'alimentation à coupler au circuit intégré sans fil (21),
dans lequel le circuit d'alimentation comprend un inducteur, et
dans lequel le module de couplage (20 ; 120) est monté sur les motifs de couplage en spirale (32a, 32b ; 52a, 52b ; 132a, 132b).

6. Dispositif à circuit intégré sans fil selon la revendication 5,
dans lequel le module de couplage (20 ; 120) et les motifs de couplage en spirale (32a, 32b ; 52a, 52b ; 132a, 132b) sont couplés magnétiquement.

7. Dispositif à circuit intégré sans fil selon la revendication 4 ou 5,
dans lequel l'inducteur est formé en spirale de sorte que le courant circule dans la même direction que les motifs de couplage en spirale (32a, 32b ; 52a, 52b ; 132a, 132b).

8. Dispositif à circuit intégré sans fil selon la revendication 6 ou 7,
dans lequel la fréquence résonnante du circuit d'alimentation correspond sensiblement à la fréquence résonnante d'un signal de réception/transmission.

9. Dispositif à circuit intégré sans fil selon l'une quelconque des revendications 5 à 8,
dans lequel la fréquence résonnante du motif d'antenne (31 ; 51a, 51b ; 131a, 131b) est supérieure à la fréquence résonnante du circuit d'alimentation.

10. Dispositif à circuit intégré sans fil selon l'une quelconque des revendications 5 à 9,
dans lequel la zone des motifs de couplage en spirale (32a, 32b ; 52a, 52b ; 132a, 132b) est plus grande que la zone du substrat de circuit d'alimentation (25 ; 125).

11. Dispositif à circuit intégré sans fil selon l'une quelconque des revendications 5 à 10,
dans lequel le substrat de circuit d'alimentation (25 ; 125) est constitué d'un matériau contenant une substance magnétique.

12. Dispositif à circuit intégré sans fil selon la revendication 11,
dans lequel le substrat de circuit d'alimentation (25 ; 125) est constitué de couches multiples et la perméabilité magnétique de la couche sur le côté de la surface qui est montée sur le motif de couplage en spirale (32a, 32b ; 52a, 52b ; 132a, 132b) est faible.
